(19)

Europäisches Patentamt

European Patent Office

Office européen des brevets

(11) Publication number: **0 416 680 A2**

# EUROPEAN PATENT APPLICATION

(21) Application number: 90202184.9

(22) Date of filing: **11.08.90**

(51) Int. Cl.5: **A23L 3/42**, A23L 1/30, A23L 1/01, C12N 1/04

(30) Priority: **04.09.89 IT 2160889**

(43) Date of publication of application:
**13.03.91 Bulletin 91/11**

(84) Designated Contracting States:
**AT BE CH DE DK ES FR GB GR IT LI LU NL SE**

(71) Applicant: **BIOZETA S.r.l.**
**Via Como, 5**
**I-22063 Cantu (Como)(IT)**

(72) Inventor: **Zamboni, Adriano**
**Strada Privata La Fagiana 9**
**I-22060 Carimate (Como)(IT)**
Inventor: **Bleu, Alberto**
**Piazza Carrara 19**
**I-20100 Milano(IT)**

(74) Representative: **Dragotti, Gianfranco et al**
**SAIC BREVETTI s.r.l. Viale Bianca Maria, 15**
**I-20122 Milano(IT)**

(54) **Compositions based on animal or vegetal tissues and process for their preparation.**

(57) By suspending or homogenizing one or more vegetal or animal tissues,either alone or in combination, in an oil or fat (anyhow C 10),and treating under vacuum and at suitable temperatures the resulting product, a composition is obtained,particularly a dietetic composition, from which,if desired,the hydrating medium is fully removed.

EP 0 416 680 A2

## COMPOSITIONS BASED ON ANIMAL OR VEGETAL TISSUES AND PROCESS FOR THEIR PREPARATION

The present invention relates to compositions containing animal or vegetal tissues or organs,in a homogenized form and devoid of hydrating medium,particularly for dietetic use.

The invention relates as well to the process for the preparation of said compositions. Dietetic compositions are known based on vegetal tissues (for example carrots,celery,tomatoes,potatoes,etc.) and on animal tissues or organs (for example brains, liver, hearth, striated muscle, etc.)either alone or in admixture, in homogenized form.

Presently these compositions are stored as such,with the self evident problems as regards the prevention of their deterioration,or in lyophilized form.

Besides the storing problems, other problems exist,such as those relating to the safeguarding of the vitamin content,those relating to the content of cholesterol and of other substances contra-indicated for particular customers, etc.

Thus the purpose of the present invention is that of providing dietetic compositions permitting the above mentioned problems to be essentially done away with.

To this end the present invention provides compositions containing vegetal and/or animal tissues in homogenized form,characterized in that the active ingredient is contained as a suspension in an animal or vegetal oil or fat,the weight ratio between vegetal or animal tissue and suspending medium being in the range from 1:0.2 to 1: 1, the compositions being prepared by the process of the present invention according to which the suspension is homogenized at a temperature not higher than the room temperature and preferably of between 10 to 15°C,and then the resulting homogenized composition is subjected to a vacuum of between 0.1 and 300 mm Hg and at temperatures of between 0 and 100°C,this step being continued for the time corresponding to the dehydrationd level sought for.

Otherwise stated, the step of vacuum treatment is adjusted as regards the time and temperature depending on how completely the water originally present in the homogenized tissue is to be removed.

As already mentioned the tissues which are homogenized with the suspending medium or fat are selected among vegetal tissues,particularly vegetables,and animal tissues or organs.In this connection also whole organs are contemplated and uses different from the dietetic ones are foreseen,for example in the cosmetic field,or to obtain bacteriologically active cultures of dehydrated strains which keep unchanged their activity.

As the suspending medium or animal or vegetal fat long chain organic compounds, having more than 10 carbon atoms, are meant,such as saturated or unsaturated, linear or branched carboxylic acids,esters and other derivatives,such that upon being admixed with organs or organic material are capable of maintaining in a suspended condition these products,even in the dry state,namely when their natural hydrating medium has been removed.

The features and specific aspects of the present invention shall more clearly appear from the following examples,having illustrating purpose only.

### Example 1

50 g of vegetal tissues (carrots,celery,tomatoes,etc.),taken either alone or in admixture,are homogenized at a temperature of 15°C together with a vegetal oil (olive or seed oil) or with an animal fat (bacon fat,butter,margarine) in the amount of 50 g.The resulting mixture is poured in a suitable equipment and subjected to a vacuum (15 mm Hg) for a time of between 20 and 30 minutes and at a temperature of between 30 and 50°C,until the originally contained water is completely distilled off.

A final mixture is obtained which is perfectly storable and has a vitamin content higher than that obtainable with the standard techniques.

### Example 2

100 g of animal tissue (brains,liver,hearth, placenta,suprarenal bodies,thymus,striated muscle,etc.),either alone or in admixture,are homogenized at a temperature not higher than 10°C with a vegetal or animal fat in the amount of 80 g and subjected to a vacuum of between 2 and 10 mm Hg and at a temperature of 20 to 42°C until the originally contained water is fully distilled off.

The final mixture must be homogenized again in the case of the use as a whole or separated in the oil extract and proteic residue in the case of use of either one or both of them.

### Example 3

100 g of animal or vegetal tissues,taken together,homogenized at a temperature not higher

than 10°C with a vegetal or animal fat (olive or seed oil,bacon fat,butter, margarine) in the amount of 30 g for the vegetal tissues and 60 g for the animal tissues,are treated under a vacuum of 2 to 10 mm Hg and at a maximum temperature of 42°C until the originally contained water is fully distilled off.The final mixture must be homogenized again in the case of use of the whole mixture or separated in the case of use of either the oil extract or the proteic residue or of both of them.

Example 4

100 g of-yeasts (Saccharomices .....)or harvest of fermentation with a water content of between 60 and 90% are homogenized with the proper amount of oil (2 to 100 g of vegetal oil) and then the treatment is continued as in the example 2.

Example 5

By operating as in the case of example 3 it is possible to obtain bacteriologically active cultures of dehydrated strains which maintain unchanged their activity.The use of the oil or fat must be such as to prevent possible alterations and ensure a greater stability of the active principle.

Example 6

Egg yolks of different animal species are homogenized with 20 to 100% by weight of vegetal oil at a temperature not higher than 10°C and treated under vacuum at a temperature not greater than 42°C until the originally contained water is fully distilled off.

The liquid phase is removed by centrifugation and the solid residue is homogenized with a like weight of oil, the centrifugation being then repeated.

A solid product is obtained containing the original proteins and phospholipids of the egg yolk.The combined liquid phases shall contain the cholesterol,the carotenoids and other liposoluble substances.

Example 7

Whole eggs of different animal species are homogenized with 20 to 100 % of oil or fat referred to their weight and are treated under vacuum at a temperature not higher than 42°C until the originally contained water is fully distilled off.

The final mixture must be homogenized again in the case of the use of the product as a whole or separated in the case of use of either the oil extract or of the proteic residue or of both of them.

When minimum amounts of oil or fatty substances are used anhydrous and homogeneous creams can be obtained suitable for a number of uses in the food, cosmetic and like fields. By the above examples there are obtained final preparations of active principles used either alone or in combined form in dietetic field and presented as powders,suspensions, more or less dense slurries,capsules containing liquids or suspensions,tablets and other standard forms for products useful for like purposes.More particularly the application of the present invention to the hen egg may lead to a final product useful in the food field ("pasta",bakery products, etc.) for particular diets devoid of cholesterol,or hypercaloric, etc.

The above described techniques can be used in order to lead to "fried"products (for example potatoes) at temperatures lower than 100°C with the evident elimination of all the drawbacks occurring at the present high temperatures,both as regards the final products and as regards a better use of the frying means.

Claims

1. Compositions based on vegetal or animal tissues, yeasts or fermentation products,characterized in that said tissues are suspended in a homogenized form in an animal or vegetal oil or fat ( $C_{10}$ )-,and the suspension is treated under vacuum for the removal in a desired degree of the hydrating medium.

2. Compositions according to claim 1, characterized in that said tissues are tissues of vegetables.

3. Compositions according to claim 1, characterized in that said tissues are animal tissues selected among brains, liver, hearth, placenta, suprarenal bodies, thymus, striated muscles and the like.

4. Compositions according to claim 1, characterized in that said tissues are whole eggs, egg yolk or egg albumen.

5. A process for the preparation of the compositions according to any of the claims 1 to 4,characterized in that said suspension is prepared by homogenizing together the tissue and the suspending medium,namely oil or fat,in a weight ratio of between 1:0.2 and 1: 1 at a temperature not higher than the room temperature.

6. A process according to claim 5, characterized in that said temperature is of between 5 and 25°C.

7. A process according to claim 5, characterized in that said suspension is subjected to the action of a vacuum of between 0.2 and 300 mm Hg, at a temperature of between 0 and 100°C for a time sufficient for the removal of the hydrating medium in the desired degree.